# EUROPEAN PATENT APPLICATION

(11) **EP 1 914 523 A2**
(43) Date of publication of application: **23.04.2008**
(21) Application number: 07019833.8
(22) Date of filing: 10.10.2007
(51) Int. Cl.: G01D 5/347

(54) **Optical encoder with protective layer**

(30) Priority: 11.10.2006 JP 2006277400
(71) Applicant: FANUC LTD, Minamitsuru-gun, Yamanashi 401-0597 (JP)
(72) Inventor: Taniguchi, Mitsuyuki, Gotenba-shi Shizuoka 412-0045 (JP); Imai, Keisuke, Yamanashi 401-0301 (JP); Terashima, Hiroya, Minamitsuru-gun Yamanashi 401-0511 (JP)
(74) Representative: Thum, Bernhard

(57) **Abstract**

An optical encoder having a structure for preventing water or the like from adhering to a V-shaped groove of a code plate of the encoder. The optical encoder has a protective plate made from an optically transmissive material, the protective plate being positioned adjacent to a surface of the code plate on which the V-shaped groove is formed.

## Description

### RELATED APPLICATIONS

The present application claims priority from Japanese Patent Application No. 2006-277400 filed on October 11, 2006, the entire contents of which are fully incorporated herein by reference.

### BACKGROUND OF THE INVENTION

### 1. Field of the Invention

The present invention relates to an optical encoder, in particular, an optical encoder for deflecting incident light by means of a concave-convex portion partially formed on a surface of a code plate.

### 2. Description of the Related Art

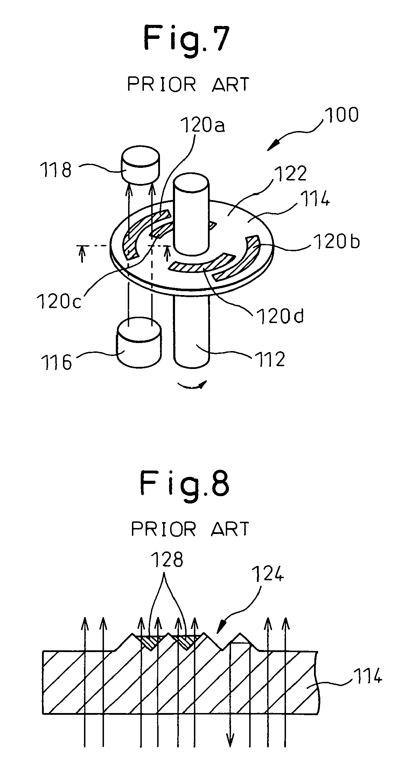

Generally, an optical encoder is used for detecting the rotational position or speed of a rotating body rotated by a motor or the like. Fig. 7 is a perspective view of an example of a conventional optical encoder. As shown, an optical encoder 100 includes a generally disk-shaped code plate 114 fixed to a shaft 112 of a motor (not shown), a light emitting part 116 and a light receiving part 118. The emitting part 116 and the receiving part 118 are opposed to each other and the code plate 114 is positioned therebetween. The code plate is made from an optically transmissive glass or resin, and has one or more concave-convex portions 120a, 120b, 120c and 120d. Each concave-convex portion is configured to fully reflect light from the light emitting part 116. Therefore, light entering each concave-convex portion does not reach the light receiving part 118. On the other hand, light entering a substantial flat portion 122 other than the concave-convex portion may reach the light receiving part 118. Therefore, pulse signals or encoder signals, having different periods of time corresponding to the rotation speed of the motor, may be obtained, whereby the rotation speed may be calculated.

Fig. 8 is a partial sectional view of Fig. 7. As shown in Fig. 8, each concave-convex portion concretely has one or more V-shaped grooves 124 formed on one side surface of the code plate 114. Such an optical encoder is disclosed in Japanese Unexamined Patent Publication (Kokai) No. 11-287671. Also, Japanese Unexamined Patent Publication (Kokai) No. 2004-309302 discloses a technique to produce a high-resolution optical encoder, by forming a V-shaped groove with high accuracy.

As described above, the V-shaped groove 124 is configured to fully reflect light from the light emitting part 116 such that light cannot reach the light receiving part 118. However, in a conventional optical encoder, the surface of the code plate on which the V-shaped groove is formed is exposed outwardly. Therefore, foreign matter such as dust or water may enter or adhere to the V-shaped groove. At this point, as shown in Fig. 8, when liquid such as water or oil, or an optically transmissive foreign material 128 adheres to the V-shaped groove, light is not fully reflected at a surface of the V-shaped groove, and a whole or a part of light progresses upwardly. This is due to the refraction index of water or the like being significantly different from that of air. Accordingly, at least a part of light entering the concave-convex portion reaches the light receiving part. As a result, an abnormal encoder signal is detected, whereby a stably correct measurement cannot be carried out.

### SUMMARY OF THE INVENTION

An object of the present invention is to provide an optical encoder having a structure for preventing water or the like from adhering to a V-shaped groove of a code plate of the encoder.

Accordingly, the invention provides an optical encoder comprising: a light emitting part; a light receiving part configured to receive light from the light emitting part; a code plate made from an optically transmissive material, the code plate being configured to be moved corresponding to the movement of an object to be measured, the code plate having a concave-convex portion at at least one side surface of the code plate, for deflecting incident light from the light emitting part; and a protective plate made from an optically transmissive material, the protective plate being positioned adjacent to a surface of the code plate on which the concave-convex portion is formed.

The concave-convex portion may be formed on a surface of the code plate, such that the concave-convex portion fully reflects incident light from the light emitting part.

It is preferable that a surface of the protective plate which does not face the code plate has a coating for enhancing the wettability of the surface of the protective plate.

Otherwise, a surface of the protective plate which does not face the code plate may have a geometric pattern for enhancing the wettability of the surface of the protective plate.

It is preferable that the protective plate be fixed to the code plate, and the code plate and the protective plate are fixed to the object as an integral unit.

Otherwise, each of the code plate and the protective plate may be adhered to the object.

Otherwise, the protective plate may be at least partially elastic, and the protective plate may be fixed to the object by engaging an elastic portion of the protective plate with a recess formed on the object.

It is preferable that the protective plate has an engaging portion which contacts and engages an outer circumferential end portion of the code plate. In this case, it is advantageous that the engaging portion engages the overall circumferential end portions of the code plate.

### BRIEF DESCRIPTION OF THE DRAWINGS

The above and other objects, features and advantages of the present invention will be made more apparent by the following description of the preferred embodiments thereof, with reference to the accompanying drawings, wherein:
Fig. 1 is a schematic perspective view of a main part of an optical encoder according to the present invention;
Fig. 2 is a sectional view of a concave-convex portion of the encoder of Fig. 1;
Fig. 3 is a sectional view of a protective plate of the encoder on which a coating or a geometric pattern is formed;
Fig. 4 is a view explaining a first attachment configuration for attaching a code plate and a protective plate to a motor shaft;
Fig. 5 is a view explaining a second attachment configuration for attaching a code plate and a protective plate to a motor shaft;
Fig. 6 is a view explaining a third attachment configuration for attaching a code plate and a protective plate to a motor shaft;
Fig. 7 is a schematic perspective view of a main part of an optical encoder according to the prior art; and
Fig. 8 is a sectional view of a concave-convex portion of the encoder of Fig. 7.

### DETAILED DESCRIPTIONS

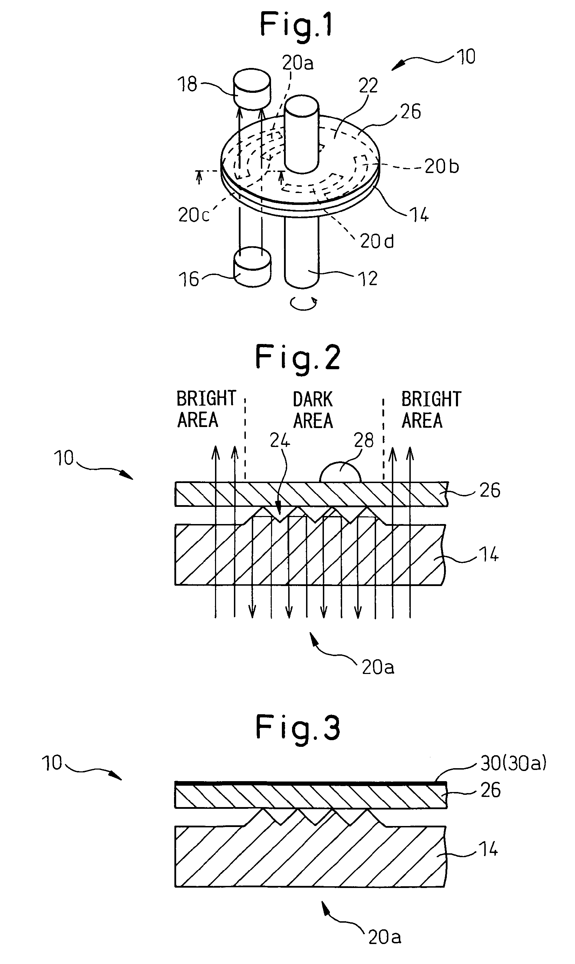

The present invention will be described below with reference to the drawings. Fig. 1 is a schematic perspective view of a main part of an optical encoder 10 according to the present invention. The encoder 10 has a generally disk-shaped code plate 14 fixed to a shaft 12 of a motor (not shown) to be measured. The encoder 10 also has a light source or a light emitting part 16 and a light receiving part 18, which are opposed to each other and the code plate 14 is positioned therebetween. The code plate 14 is made from an optically transmissive glass or resin, and has one or more (in this case, four or two pairs of) concave-convex portions 20a, 20b, 20c and 20d. A portion 22 of the encoder 14 other than the concave-convex portion is substantially flat, whereby the flat portion 22 may serve as a light transmitting part without deflecting light entering the flat portion. The light receiving part 18 has two light-sensitive elements (not shown), corresponding the two pairs of concave-convex portions.

As shown in Fig. 2 indicating an axial cross section of Fig. 1, each concave-convex portion includes one or more microscopic V-shaped grooves 24. The V-shaped groove 24 is configured to fully reflect light entering the concave-convex portion from the light emitting part 16, so as to make a dark area on the concave-convex portion facing the light receiving part 18. Therefore, while the motor is rotated, two states, in which the light sensitive element of the light receiving part 18 receives or does not receive light, are alternately repeated, whereby a pulse signal may be obtained. Accordingly, the rotational position and/or speed of the motor may be measured. The configuration described above may be the same as the conventional encoder.

The optical encoder 10 of the invention has a protective plate 26 made from an optically transmissive material, such as transmissive glass or resin, which is positioned adjacent to a surface of the code plate 14 on which the V-shaped groove 24 is formed. As described above, when a foreign transmissive matter or water adhere to the V-shaped groove, light is not fully reflected by the concave-convex portion, whereby the desired performance of the encoder cannot be achieved. However, due to the protective plate 26, foreign matter or water is prevented from adhering to the V-shaped groove 24. Therefore, light from the light emitting part is fully reflected, whereby a normal pulse signal may be obtained. As shown in Fig. 2, water 28 may be adhered to the other side of the protective plate 26, which does not face the code plate 14. However, such water does not affect the reflecting action at the V-shaped groove 24.

At this point, in the case that the light sensitive element of the light receiving part should receive light, if water is adhered, in a swelled drop shape, to a part (or a bright area) of the protective plate 26 where light passes through, in a swelled drop shape, and light is reflected or deflected by the drop shaped water, whereby the function of the encoder may be deteriorated. Therefore, as shown in Fig. 3, it is preferable that coating processing be performed on a surface of the protective plate 26, which does not face the code plate 14, so as to enhance the wettability of the surface of the protective plate. By means of a coating 30 thus formed, water adhered to the surface may be thinly spread on the surface of the protective plate 26, without forming a drop shape. Accordingly, the adhered water does not substantially affect a signal of the encoder. Instead of the coating 30, a geometric pattern 30a, for enhancing the wettability, may be formed on the surface of the protective plate, so as to obtain the same effect.

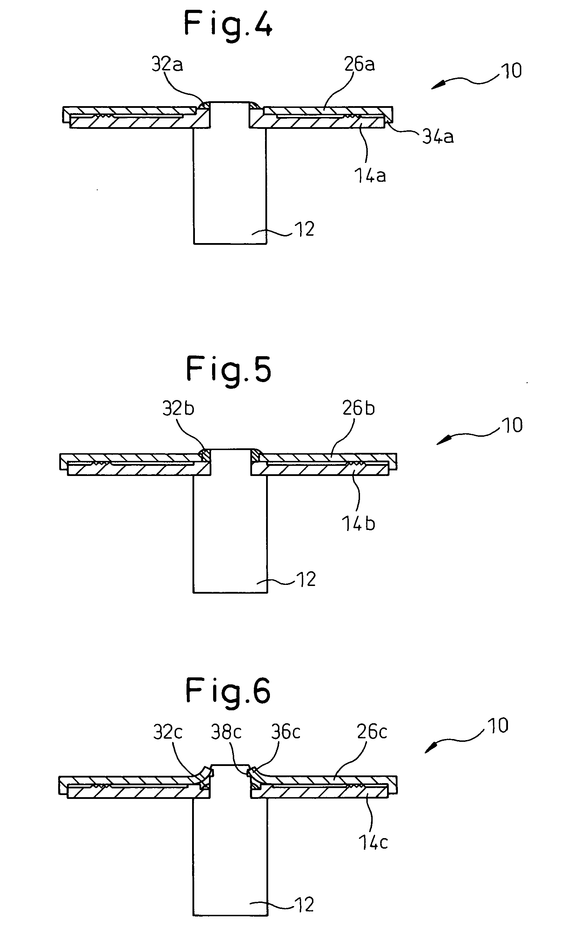

Figs. 4 to 6 are axially sectional views, showing embodiments for attaching a code plate and a protective plate to a motor shaft. In a first embodiment of Fig. 4, a protective plate 26a is previously fixed to a code plate 14a by adhering or welding, and then, the code plate 14a is fixed to the motor shaft 12 by means of an adhesive 32a such as a UV-adhesive or the like. In this embodiment, the code plate 14a and the protective plate 26a may be handled as an integral unit when attaching to the shaft, whereby the plates may be easily positioned relative to the shaft, in comparison to a case in which each plate is individually attached to the shaft. As shown in Fig. 4, in order that the protective plate 26a may be easily adhered or welded to the code plate 14a, the protective plate 26a preferably has, at at least a circumferential end portion thereof, an engaging portion (or a protrusion) 34a which contacts and engages an outer circumferential end portion of the code plate 14a. When the protrusion 34a is configured to engage the overall circumferential end portions of the code plate 14, a significant effect may be obtained in relation to preventing water or foreign matter from entering between the code plate 14a and the protective plate 26a. In other words, water or the like is prevented from adhering to the V-shaped groove. In addition, the protrusion 34a may avoid warpage of the protective plate 26a.

In a second embodiment as shown in Fig. 5, each of a code plate 14b and a protective plate 26b is adhered to the shaft 12, by means of an adhesive 32b such as a UV-adhesive or the like. In a manufacturing process of the optical encoder of the second embodiment, the code plate 14b and the protective plate 26b may be substantially simultaneously fixed to the shaft 12, whereby a front-end process, for previously fixing the protective plate 26b to the code plate 14b, is not necessary.

In a third embodiment as shown in Fig. 6, a code plate 14c is fixed to the shaft 12 by means of an adhesive 32c such as a UV-adhesive or the like. Then, a protective plate 26c is fixed to the shaft 12 by engaging an elastic inner circumferential end portion 36c of the protective plate 26c with a recess or a groove 38c formed on the outer peripheral portion of the shaft 12. In other words, at least the inner circumferential end portion 36c of the protective plate 26c is made from an elastic material. In a manufacturing process of the optical encoder of the third embodiment, a front-end process for previously fixing the protective plate 26c to the code plate 14c is not necessary, and further, an adhesive for fixing the protective plate 26c to the shaft 12 is also not necessary.

According to the optical encoder according to the present invention, by arranging the protective plate close to the code plate, water or the like may be prevented from adhering to the concave-convex portion formed on the code plate. Therefore, the deflecting function of light at the concave-convex portion is not affected, whereby a stable and correct encoder function may be obtained.

By forming a coating or a geometric pattern for enhancing the wettability on the surface of the protective plate which does not face the code plate, water adhered to the surface may be thinly spread thereon, whereby, the deflection of light passing through the surface, due to the adhered water, may be restricted.

When the code plate and the protective plate are attached to the object to be measured, by fixing the protective plate to the code plate as an integral unit, the positioning of the integral unit relative to the object may be facilitated, in comparison with a case in which the code plate and the protective plate are fixed to the object individually. On the other hand, when the code plate and the protective plate are respectively adhered to the object, a number of processes for producing the encoder may be reduced. Alternatively, by forming at least a part of the protective plate using elastic material, and by engaging an elastic portion of the protective plate with a recess formed on the object, a front-end process, for previously fixing the protective plate to the code plate, is not necessary, and further, an adhesive for fixing the protective plate to the code plate is also not necessary.

By providing an engaging portion to the protective plate, which is capable of contacting and engaging with the outer circumferential end portion of the code plate, the protective plate may be easily positioned relative to the code plate when adhered or welded to the code plate. Further, when the engaging portion is configured to engage the overall circumferential end portions of the code plate, a significant effect may be obtained in relation to preventing water or a foreign matter entering between the code plate and the protective plate. In other words, water or the like is prevented from adhering to the concave-convex portion. In addition, the engaging portion may avoid warpage of the protective plate.

While the invention has been described with reference to specific embodiments chosen for the purpose of illustration, it should be apparent that numerous modifications could be made thereto, by one skilled in the art, without departing from the basic concept and scope of the invention.

## Claims

1. An optical encoder (10) comprising: a light emitting part (16); a light receiving part (18) configured to receive light from the light emitting part (16); and a code plate (14, 14a-14c) made from an optically transmissive material, the code plate (14, 14a-14c) being configured to be moved corresponding to the movement of an object (12) to be measured, the code plate (14, 14a-14c) having a concave-convex portion (20a-20d) at at least one side surface of the code plate (14, 14a-14c), for deflecting incident light from the light emitting part (16),
**characterized in that** the optical encoder (10) further comprises a protective plate (26, 26a-26c) made from an optically transmissive material, the protective plate (26, 26a-26c) being positioned adjacent to a surface of the code plate (14, 14a-14c) on which the concave-convex portion (20a-20d) is formed.

2. The optical encoder according to claim 1, **characterized in that** the concave-convex portion (20a-20d) is formed on a surface of the code plate (14, 14a-14c), such that the concave-convex portion (20a-20d) fully reflects incident light from the light emitting part (16).

3. The optical encoder according to claim 1, **characterized in that** a surface of the protective plate (26, 26a-26c) which does not face the code plate (14, 14a-14c) has a coating (30) for enhancing the wettability of the surface of the protective plate (26, 26a-26c).

4. The optical encoder according to claim 1, **characterized in that** a surface of the protective plate (26, 26a-26c) which does not face the code plate (14, 14a-14c) has a geometric pattern (30a) for enhancing the wettability of the surface of the protective plate (26, 26a-26c).

5. The optical encoder according to claim 1, **characterized in that** the protective plate (26a) is fixed to the code plate (14a), and the code plate (14a) and the protective plate (26a) are fixed to the object (12) as an integral unit.

6. The optical encoder according to claim 1, **characterized in that** each of the code plate (14b) and the protective plate (26b) is adhered to the object (12).

7. The optical encoder according to claim 1, **characterized in that** the protective plate (26c) is at least partially elastic, and the protective plate (26c) is fixed to the object (12) by engaging an elastic portion (36c) of the protective plate (26c) with a recess (38c) formed on the object (12).

8. The optical encoder according to claim 1, **characterized in that** the protective plate (26a) has an engaging portion (34a) which contacts and engages an outer circumferential end portion of the code plate (14a).

9. The optical encoder according to claim 8, **characterized in that** the engaging portion (34a) engages the overall circumferential end portions of the code plate (14a).
